(19) **Europäisches Patentamt / European Patent Office / Office européen des brevets**

(11) **EP 3 861 282 B1**

(12) **FASCICULE DE BREVET EUROPEEN**

(45) Date de publication et mention
de la délivrance du brevet:
**19.07.2023 Bulletin 2023/29**

(21) Numéro de dépôt: **19786506.6**

(22) Date de dépôt: **02.10.2019**

(51) Classification Internationale des Brevets (IPC):
**G01B 11/06** *(2006.01)* **G01B 11/30** *(2006.01)*

(52) Classification Coopérative des Brevets (CPC):
**G01B 11/303; G01B 11/0608;** G01B 2210/50

(86) Numéro de dépôt international:
**PCT/EP2019/076762**

(87) Numéro de publication internationale:
**WO 2020/070220 (09.04.2020 Gazette 2020/15)**

(54) **DISPOSITIF DE MESURE CONFOCALE CHROMATIQUE D'UNE HAUTEUR ET/OU D'UNE ORIENTATION LOCALE D'UNE SURFACE D'UN ÉCHANTILLON ET PROCÉDÉS CORRESPONDANTS DE MESURE D'UNE HAUTEUR OU D'UNE RUGOSITÉ D'UN ÉCHANTILLON**

VORRICHTUNG ZUR CHROMATISCHEN KONFOKALEN MESSUNG EINER LOKALEN HÖHEN- UND/ODER ORIENTIERUNG EINER PROBENOBERFLÄCHE UND ENTSPRECHENDE VERFAHREN ZUR MESSUNG DER HÖHE ODER RAUHEIT EINER PROBE

DEVICE FOR THE CHROMATIC CONFOCAL MEASUREMENT OF A LOCAL HEIGHT AND/OR ORIENTATION OF A SURFACE OF A SAMPLE AND CORRESPONDING METHODS FOR MEASURING A HEIGHT OR A ROUGHNESS OF A SAMPLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.10.2018 FR 1859112**

(43) Date de publication de la demande:
**11.08.2021 Bulletin 2021/32**

(73) Titulaire: **SCIENCES ET TECHNIQUES INDUSTRIELLES DE LA LUMIERE 13855 Aix-en-Provence (FR)**

(72) Inventeurs:
• **GAILLARD-GROLEAS, Jérôme 13090 AIX EN PROVENCE (FR)**
• **GERAND, Sébastien 13100 LE THOLONET (FR)**
• **MOUSSU, Gabrielle 13001 MARSEILLE (FR)**

(74) Mandataire: **Regimbeau 20, rue de Chazelles 75847 Paris Cedex 17 (FR)**

(56) Documents cités:
EP-A1- 1 505 425     DE-A1-102006 026 775
US-A1- 2017 227 352

**Description**

DOMAINE DE L'INVENTION

L'invention concerne de manière générale le domaine de l'inspection et du contrôle optique d'une pièce, et plus précisément la mesure d'une hauteur et/ou une orientation ponctuelle d'une surface d'un échantillon à l'aide d'un dispositif optique.

ARRIERE-PLAN TECHNOLOGIQUE

Il existe à ce jour des dispositifs de mesure du type comparateurs optiques comprenant un capteur optique permettant de mesurer ponctuellement et sans contact la hauteur et/ou l'orientation locale d'une surface d'un échantillon. Le diamètre du faisceau lumineux au niveau de la surface de l'échantillon (généralement désigné par le terme anglais « spot ») est généralement compris entre 1.5 $\mu$m et 50 $\mu$m, selon l'objectif choisi.

Cependant, ces comparateurs optiques sont sensibles à la rugosité de la surface à contrôler, qui est susceptible d'induire un important défaut de répétabilité des mesures. Or ces comparateurs optiques sont majoritairement utilisés pour le contrôle de pièce dont la rugosité dépasse plusieurs micromètres, voire quelques dizaines de micromètres. Cependant, étant très sensibles à la rugosité, des comparateurs avec contact du type palpeur mécanique leur sont souvent préférés dans la mesure où ils sont plus fiables et leurs mesures sont plus robustes, avec des répétabilités inférieures au micromètre.

Afin d'améliorer la robustesse des mesures effectuées par les comparateurs optiques, et notamment leur sensibilité à la rugosité de la surface à inspecter ou contrôler, il a été envisagé d'élargir la taille du spot de mesure. Toutefois, lorsque le comparateur optique utilise la microscopie confocale chromatique pour la réalisation des mesures, l'augmentation de la taille du spot de mesure introduit nécessairement des aberrations optiques faussant les mesures en amplifiant la sensibilité du comparateur aux rugosités.

Le document EP 1 505 425 décrit un dispositif de mesure non chromatique comprenant une diode laser générant un faisceau lumineux monochromatique et cohérent. Afin de supprimer les phénomènes de chatoiement (Speckle), ce document propose d'ajouter un mécanisme permettant de déplacer le faisceau lumineux. Toutefois, la source lumineuse d'un dispositif de mesure confocale chromatique ayant une faible cohérence, ces phénomènes de chatoiement sont inexistants lors des mesures. De plus, ce document ne fournit aucun enseignement concernant l'amélioration de la sensibilité à la rugosité de surface d'un dispositif de mesure confocale chromatique.

Le document US 2017/0227352 quant à lui décrit un dispositif de mesure confocale chromatique comprenant des moyens de déplacement du dispositif pour suivre l'objet à mesurer. En revanche, ce document ne propose aucune solution permettant d'améliorer la sensibilité du dispositif à la rugosité de la surface à mesurer.

RESUME DE L'INVENTION

Un objectif de l'invention est donc de proposer un dispositif de mesure d'une hauteur et/ou une orientation locale d'une surface d'un échantillon utilisant la microscopie confocale chromatique, dont la sensibilité à l'état de surface soit améliorée en comparaison avec les dispositifs de mesure optique actuels, et qui soit capable d'obtenir des répétabilités comparables à celle des palpeurs mécaniques de sorte à permettre d'effectuer des mesures robustes et répétables, même lorsque la surface de l'échantillon à contrôler présente une rugosité de l'ordre d'un micromètre.

Pour cela, l'invention propose conformément à la revendication 1 un dispositif de mesure confocale chromatique d'une hauteur et/ou d'une orientation locale d'une surface d'un échantillon, le dispositif comprenant

- une source lumineuse configurée pour générer un faisceau lumineux polychromatique
- un objectif de projection comportant un objectif à chromatisme axial configuré pour appliquer le faisceau lumineux sur la surface de l'échantillon, le faisceau lumineux présentant un axe de propagation défini,
- un capteur optique, configuré pour recevoir un faisceau lumineux réfléchi par la surface de l'échantillon et mesurer une énergie totale dudit faisceau lumineux réfléchi reçue pendant un intervalle d'intégration,
- une unité de traitement du signal issu du capteur optique configurée pour déterminer la hauteur et/ou l'orientation locale de la surface de l'échantillon, et
- un système de balayage, couplé à l'objectif de projection et configuré pour déplacer l'axe de propagation du faisceau lumineux par rapport à l'objectif de projection le long d'une trajectoire prédéterminée pendant l'intervalle d'intégration du capteur optique, de sorte que l'énergie totale mesurée par le capteur optique corresponde à une moyenne spatiale dynamique de l'énergie totale du faisceau lumineux réfléchi par la surface de l'échantillon le long de la trajectoire prédéterminée.

Certaines caractéristiques préférées mais non limitatives du dispositif de mesure confocale chromatique décrit ci-dessus sont les suivantes, prises individuellement ou en combinaison :

- le système de balayage est configuré pour déplacer l'axe de propagation sur la surface de l'échantillon à une vitesse définie de sorte qu'une distance parcourue par l'axe de propagation sur la surface de l'échantillon pendant l'intervalle d'intégration mesure entre trente micromètres et six cent micromètres, de préférence entre cinquante micromètres et quatre cent micromètres.

- la trajectoire est une boucle fermée.

- le système de balayage est configuré pour déplacer l'axe de propagation le long de la trajectoire à une fréquence supérieure ou égale à 1 Hz, de préférence supérieure à 50 Hz.

- le système de balayage comprend l'un au moins des éléments suivants : une lentille à décentrement piloté, un prisme dont une face d'entrée est positionnée de sorte à présenter un angle non nul par rapport à un plan normal à l'axe de propagation du faisceau lumineux au niveau de son arrivée sur ladite face d'entrée, ledit prisme étant monté mobile en rotation autour d'un axe qui est normal audit plan, des moyens configurés pour déplacer au moins une fibre optique reliant une source lumineuse à l'objectif de projection de sorte à créer une déviation de l'axe de propagation du faisceau lumineux en déplaçant son point source, un miroir plan, monté mobile autour d'un axe de rotation, une surface du miroir formant un angle non nul par rapport à un plan normal à l'axe de rotation, un miroir orientable adapté pour introduire une déviation optique dans le faisceau lumineux.

Selon un deuxième aspect, l'invention propose conformément à la revendication 5 un procédé de mesure confocale chromatique d'une hauteur ou d'une position d'une surface d'un échantillon à l'aide d'un dispositif comme décrit ci-dessus, le procédé comprenant les étapes suivantes :

- générer un faisceau lumineux polychromatique
- appliquer le faisceau lumineux sur la surface de l'échantillon, le faisceau lumineux présentant un axe de propagation défini à l'aide de l'objectif de projection du dispositif et
- recevoir le faisceau lumineux réfléchi par la surface par le capteur optique du dispositif et mesurer une énergie totale dudit faisceau lumineux réfléchi reçue pendant un intervalle d'intégration,
- déplacer l'axe de propagation du faisceau lumineux par rapport à l'objectif de projection le long d'une trajectoire prédéterminée pendant la réception du faisceau lumineux réfléchi par la surface par le capteur optique, de sorte que le capteur optique effectue une moyenne spatiale dynamique de l'énergie totale du faisceau lumineux réfléchi par la surface de l'échantillon le long de la trajectoire prédéterminée.

Certaines caractéristiques préférées mais non limitatives du procédé de mesure décrit ci-dessus sont les suivantes, prises individuellement ou en combinaison :

- le procédé comprend en outre une étape de définition de la hauteur ou de la position de la surface à partir de la moyenne spatiale dynamique.
- le faisceau lumineux réfléchi est transmis à un spectrographe configuré pour déterminer un ou plusieurs pics correspondant à des interfaces rencontrées par le faisceau lumineux sur la surface, le procédé comprenant en outre une étape au cours de laquelle une somme des pics ainsi déterminé est réalisée pendant l'intervalle d'intégration pour obtenir un pic moyenné et une étape au cours de laquelle un barycentre du pic moyenné est déterminé.
- l'axe de propagation du faisceau lumineux est déplacé le long d'une trajectoire fermée.
- l'axe de propagation du faisceau lumineux est déplacé le long de la trajectoire à une fréquence supérieure ou égale à 1 Hz, de préférence supérieure à 50 Hz.
- une distance parcourue par l'axe de propagation sur la surface de l'échantillon pendant l'intervalle d'intégration mesure entre trente micromètres et six cent micromètres, de préférence entre cinquante micromètres et quatre cent micromètres.

Selon un troisième aspect, l'invention propose conformément à la revendication 10 un procédé de détermination d'une rugosité d'une surface d'un échantillon à l'aide d'un le dispositif de mesure confocale chromatique comme décrit ci-dessus, le procédé comprenant les étapes suivantes :

- générer un faisceau lumineux polychromatique
- appliquer un faisceau lumineux sur la surface de l'échantillon, le faisceau lumineux présentant un axe de propagation défini à l'aide de l'objectif de projection du dispositif et

- recevoir le faisceau lumineux réfléchi par la surface par le capteur optique du dispositif et mesurer une énergie totale dudit faisceau lumineux réfléchi reçue pendant un intervalle d'intégration,
- déplacer l'axe de propagation du faisceau lumineux par rapport à l'objectif de projection le long d'une trajectoire prédéterminée pendant la réception du faisceau lumineux réfléchi par la surface par le capteur optique, de sorte que le capteur optique mesure une rugosité de la surface de l'échantillon le long de la trajectoire prédéterminée.

Certaines caractéristiques préférées mais non limitatives du procédé de détermination d'une rugosité décrit ci-dessus sont les suivantes, prises individuellement ou en combinaison :

- l'axe de propagation du faisceau lumineux est déplacé le long de la trajectoire à une fréquence supérieure ou égale à 1 Hz.
- une distance parcourue par l'axe de propagation sur la surface de l'échantillon pendant l'intervalle d'intégration mesure entre un micromètres et vingt micromètres.
- le procédé comprend en outre une étape d'identification des extrema locaux de l'énergie totale du faisceau lumineux le long de la trajectoire prédéterminée.
- le faisceau lumineux réfléchi est transmis à un spectrographe configuré pour déterminer un ou plusieurs pics correspondant à des interfaces rencontrées par le faisceau lumineux sur la surface, le procédé comprenant en outre une étape au cours de laquelle les extrema sont déterminés en réalisant une somme des pics pendant l'intervalle d'intégration pour obtenir un pic moyenné et en déterminant des bornes du pic moyenné.
- le faisceau lumineux réfléchi est transmis à un spectrographe configuré pour déterminer un ou plusieurs pics correspondant à des interfaces rencontrées par le faisceau lumineux sur la surface, le procédé comprenant en outre une étape au cours de laquelle une somme des pics ainsi déterminé est réalisée pendant l'intervalle d'intégration pour obtenir un pic moyenné et une étape au cours de laquelle une forme et/ou une symétrie du pic moyenné est déterminée.

BREVE DESCRIPTION DES DESSINS

D'autres caractéristiques, buts et avantages de la présente invention apparaîtront mieux à la lecture de la description détaillée qui va suivre, et au regard des dessins annexés donnés à titre d'exemples non limitatifs et sur lesquels :

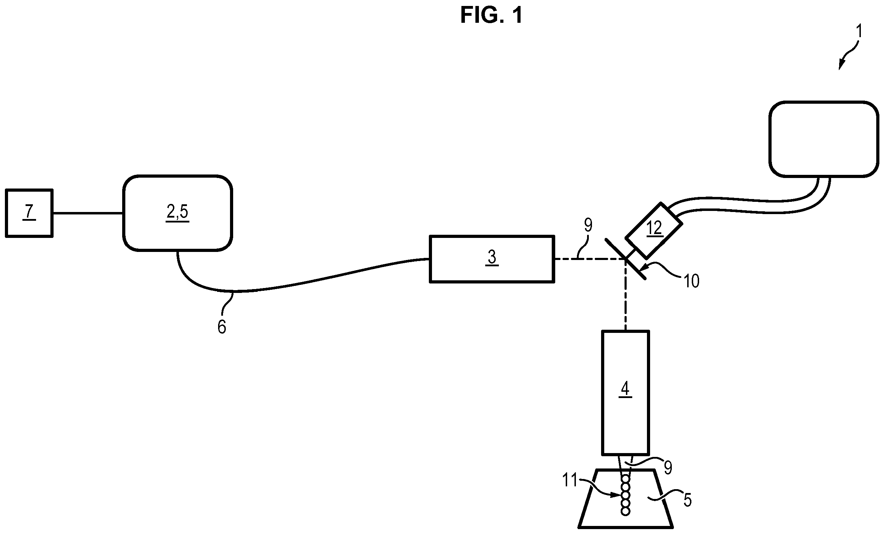

La figure 1 est une vue schématique d'un exemple de réalisation d'un dispositif conforme à un mode de réalisation de l'invention comprenant un « capteur point » et un système de balayage en réflexion. Plusieurs exemples de trajectoires successives ont été illustrées à la surface de l'échantillon.

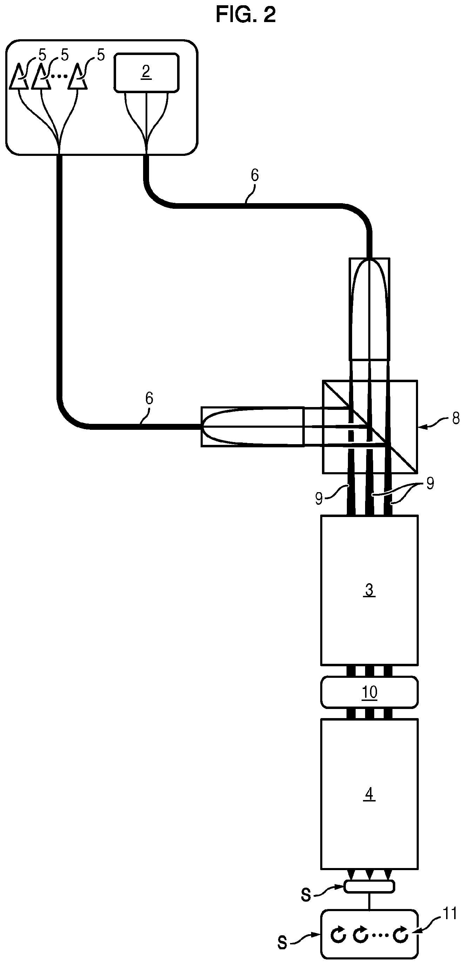

La figure 2 est une vue schématique d'un exemple de réalisation d'un dispositif conforme à un mode de réalisation de l'invention comprenant un « capteur ligne » et un système de balayage en transmission, ainsi qu'une vue du dessus de la surface de l'échantillon sur laquelle plusieurs trajectoires simultanées ont été illustrées.

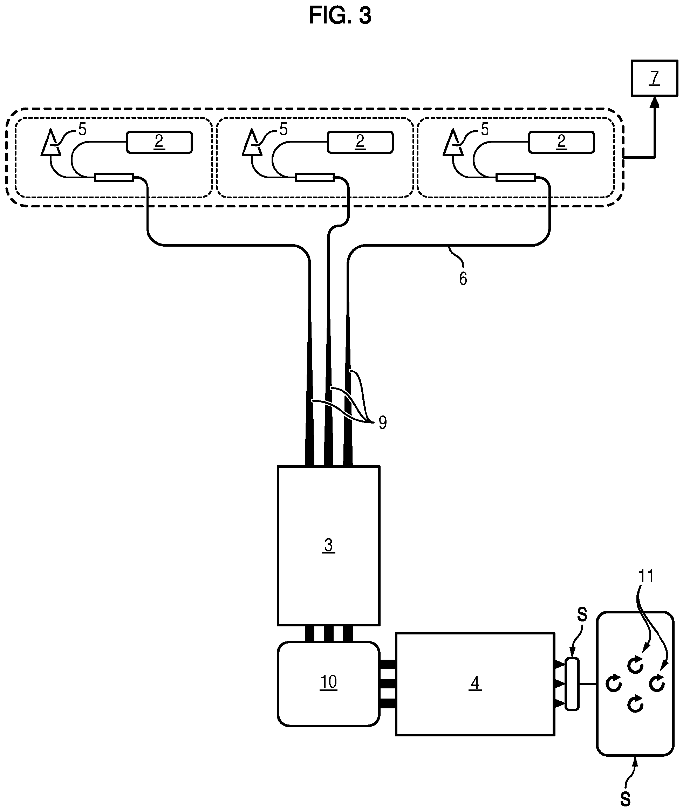

La figure 3 est une vue schématique d'un exemple de réalisation d'un dispositif conforme à un mode de réalisation de l'invention comprenant un « capteur multipoints » et un système de balayage en réflexion, ainsi qu'une vue du dessus de la surface de l'échantillon sur laquelle plusieurs exemples de trajectoires successives ont été illustrées.

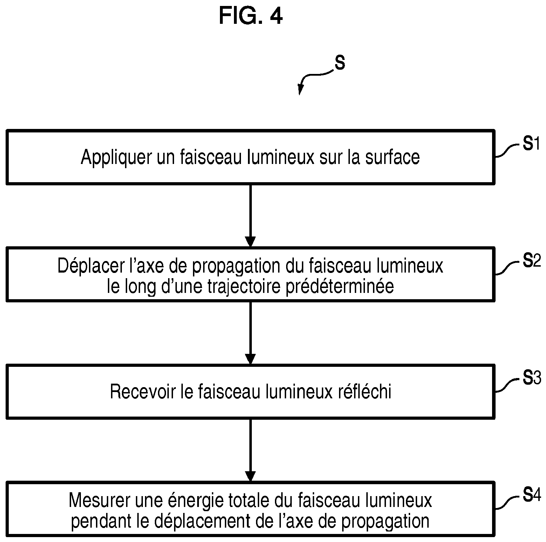

La figure 4 est un organigramme illustrant les étapes d'un procédé de mesure d'une hauteur et/ou d'une orientation locale ou d'une rugosité conforme à un mode de réalisation de l'invention.

DESCRIPTION DETAILLEE D'UN MODE DE REALISATION

Un dispositif 1 de mesure d'une hauteur et/ou une d'orientation locale d'une surface S d'un échantillon, ou comparateur, comprend, de manière connue en soi :

- une source lumineuse 2, par exemple une diode électroluminescente blanche ou toute autre source de lumière blanche, configurée pour générer un faisceau 9 lumineux polychromatique,
- un objectif de projection comportant successivement un collimateur 3 et un objectif à chromatisme axial 4 (ou crayon optique) configuré pour focaliser le faisceau 9 lumineux généré sur la surface S de l'échantillon et recevoir le faisceau 9 lumineux réfléchi par la surface S,
- un système d'analyse spectrale 5 tel qu'un spectrographe, configuré pour déterminer une répartition spectrale du faisceau 9 lumineux réfléchi après son passage à travers l'objectif de projection,
- des moyens de traitement du signal permettant d'analyser cette répartition spectrale afin de calculer la position axiale de la surface S.

La source lumineuse 2, l'objectif de projection et le spectrographe 5 peuvent être reliés par l'intermédiaire d'au moins une fibre optique 6. De manière connue en soi, la source lumineuse 2 et le spectrographe 5 peuvent être logés dans un coffret optronique, qui peut être relié à l'objectif de projection par l'intermédiaire d'au moins une fibre optique 6 et aux moyens de traitement par un câble. Le cas échéant, l'objectif de projection 3, 4 peut également être logé dans le coffret optronique. On notera que, dans ce cas, la fibre optique 6 est optionnelle.

La source lumineuse 2 génère un faisceau 9 lumineux polychromatique, par opposition à une source lumineuse monochromatique tel qu'un laser. La mise en oeuvre d'un faisceau lumineux polychromatique qui permet en effet de réaliser des mesures confocales chromatiques et notamment de présenter un chromatisme axial le long de l'axe de mesure, ce qui permet une mesure de distance sans aucun déplacement du dispositif de mesure.

Par ailleurs, le faisceau lumineux a une faible cohérence (spatiale et temporelle), par opposition au faisceau laser qui est cohérent spatialement et temporellement.

Le crayon optique 4 présente un chromatisme axial connu et comprend, de manière connue en soi, une série de lentilles disposées dans l'objectif de sorte que leurs axes optiques soient coaxiaux.

Dans une première forme de réalisation illustrée en figure 1, le dispositif 1 est un « capteur point ». La source lumineuse 2 étant polychromatique, le crayon optique 4 forme un ensemble d'images monochromatiques de la source (ou, plus précisément, de l'extrémité de la fibre optique 6 qui agit comme un sténopé). Ces images définissent un segment de droite d'observation dans l'espace, chaque image de la source étant définie par sa longueur d'onde et sa distance de focalisation par rapport au crayon optique 4. Ce même crayon optique 4 collecte en outre le faisceau 9 lumineux rétrodiffusé pour former, sur l'extrémité de la fibre optique 6 qui joue le rôle d'un trou de filtrage spatial, une image polychromatique commune de l'ensemble des images monochromatiques. Cette image polychromatique est composée par les longueurs d'ondes des différentes interfaces rencontrées par le faisceau 9 lumineux dans l'échantillon.

L'image polychromatique est alors transmise, via la fibre optique 6, au spectrographe 5. Le spectre qui y est mesuré montre alors un ou plusieurs pics correspondant aux interfaces rencontrées par le faisceau 9 lumineux lorsque l'on place l'échantillon à l'intérieur de l'espace couvert par le chromatisme (*i.e.* le segment de droite d'observation). Par exemple, si l'échantillon comprend une surface S opaque, il existe une seule longueur d'onde de la source lumineuse 2 pour laquelle on obtient une image nette sur la surface S. Les moyens de traitement du signal permettent alors de déduire la distance entre le crayon optique 4 et la surface S à partir de la longueur d'onde identifiée par le spectrographe 5.

Dans une deuxième forme de réalisation illustrée en figure 2, le dispositif 1 est un « capteur ligne » et permet la mesure simultanée d'un ensemble de points alignés le long d'une ligne. A la différence du capteur point, le capteur ligne comprend une série de fibres optiques 6 configurées pour guider la lumière générée par la source lumineuse 2 jusqu'à l'entrée du crayon optique 4 et, en retour, du crayon optique 4 jusqu'au spectrographe 5. Plus précisément, l'extrémité de ces fibres optiques 6 sont organisées spatialement de façon à définir un champ latéral de mesure (notamment une ligne). Les faisceaux 9 lumineux émis par chacune de ces fibres optiques 6 se propagent alors dans le crayon optique 4 via un séparateur 8 jusqu'à la surface S, où ils sont dispersés le long de l'axe optique. De manière analogue au capteur point, chaque longueur d'onde parfaitement focalisée pour chaque point du champ latéral est réfléchie par la surface S de l'échantillon, se propage en sens inverse dans le crayon optique 4 et est guidée, via le séparateur 8 et les fibres optiques 6, jusqu'à l'entrée du spectrographe 5. Le spectrographe 5 comprend alors un photodétecteur afin de visualiser les spectres correspondant à chaque point de mesure de la ligne.

Dans une troisième forme de réalisation illustrée en figure 3, le dispositif 1 est un « capteur multipoints ». Il s'agit d'un capteur dans lequel plusieurs sources lumineuses sont disposées de façon ordonnée, mais pas nécessairement alignées comme dans le cas d'un capteur ligne. Il peut s'agir par exemple de trois points en triangle, de quatre points en carré ou rectangle, de N points répartis sur un cercle, et d'une façon générale de N points répartis selon un motif géométrique. Ces points source peuvent être l'extrémité d'une fibre optique issue chacune d'un contrôleur monopoint, comme cela est représenté sur la figure 3, où les extrémités des faisceaux de fibres similaires à la figure 2 dans lequel les points ne sont pas nécessairement alignés.

Les moyens de traitement du signal comportent un capteur optique 7 configuré pour mesurer une énergie totale (en J) du faisceau 9 lumineux réfléchi par la surface S de l'échantillon à travers l'objectif de projection pendant un intervalle d'intégration (en s), ainsi qu'une unité de traitement, par exemple un ordinateur ou un serveur, adaptée pour exécuter le procédé qui sera décrit plus en détails ci-après. L'unité de traitement peut par exemple comprendre un calculateur de type processeur, microprocesseur, microcontrôleur, etc., L'équipement comprend également des moyens de commande (écran tactile, clavier, souris, boutons, etc.).

Afin de réduire la sensibilité du dispositif 1 à la rugosité de la surface S à contrôler ou inspecter, le dispositif 1 comprend en outre un système de balayage 10 couplé à l'objectif de projection et configuré pour déplacer l'axe de propagation du faisceau 9 lumineux par rapport à l'axe optique de l'objectif de projection le long d'une trajectoire 11 prédéterminée pendant l'intervalle d'intégration du capteur optique 7. Grâce au système de balayage 10, l'énergie totale mesurée par le capteur optique 7 correspond à une moyenne spatiale dynamique de l'énergie totale du faisceau 9 lumineux réfléchi par la surface S de l'échantillon le long de la trajectoire 11 prédéterminée. Le dispositif 1 ne réalise donc plus une mesure ponctuelle, au cours de laquelle le point de mesure est fixe sur la surface S pendant l'intervalle d'intégration, mais une mesure spatiale moyennée optiquement résultant du mouvement du point de mesure sur la surface S pendant l'intervalle d'intégration du capteur optique 7, équivalente à la pointe de touche d'un palpeur mécanique. La mesure du dispositif 1 est donc fiabilisée, en agrandissant la surface S de mesure sans pour autant générer des aberrations.

On notera que le capteur optique 7 ne réalise qu'une seule mesure de l'énergie totale du faisceau 9 lumineux réfléchi par le point de mesure pendant son déplacement le long de la trajectoire 11 durant l'intervalle d'intégration (moyenne optique), et non une pluralité de mesures qui sont ensuite moyennées (moyenne des mesures individuelles). Le moyennage est donc réalisé en temps réel, ce qui permet d'utiliser le capteur à sa cadence nominale tout en obtenant des mesures moyennées. De plus, aucun traitement logiciel supplémentaire n'est nécessaire pour réaliser cette moyenne puisque celle-ci est faite optiquement, limitant ainsi la puissance de calcul nécessaire.

Le moyennage spatial dynamique réalisé par le dispositif 1 permet ainsi de moyenner la rugosité de surface S réelle de l'échantillon, quelle que soit l'ouverture numérique ou la taille du spot de mesure. En effet, lorsque le crayon optique 4 présente une faible ouverture numérique ou un gros spot de mesure, la rugosité de surface S est nécessairement amplifiée par le capteur optique 7 : l'ajout du système de balayage 10 permet ainsi de moyenner optiquement non seulement la rugosité de la surface S de l'échantillon, mais également les artéfacts introduits par le crayon optique 4 dus à la combinaison de la rugosité et des caractéristiques du crayon optique 4. Il est donc à présent possible d'utiliser des crayons optiques initialement inadaptés à la mesure de hauteur et/ou d'une orientation locale, mais présentant d'autres avantages comme une grande distance de travail, une grande étendue de mesure ou une grande efficacité photométrique, afin d'effectuer des mesures de précision en s'affranchissant de leurs limitations théoriques.

Pour cela, le signal obtenu en sortie du capteur optique 7 par les moyens de traitement du signal correspond à la somme de tous les pics intégrés pendant l'intervalle d'intégration du capteur optique 7. Le pic obtenu, ou pic moyenné, sera donc élargi selon la distribution des différentes altitudes rencontrées durant cet intervalle d'intégration, pondérées par la réflectivité des surfaces. Le barycentre du pic moyenné correspond à la valeur moyenne des altitudes - et donc la mesure de hauteur et/ou d'orientation recherchée.

Le cas échéant, les moyens de traitement peuvent en outre être configurés pour déterminer les bornes du pic moyenné, et plus particulièrement ses extrema locaux (pics et creux de rugosité), sa symétrie ou encore sa forme (plutôt de type pics ou de type creux), et d'en déduire des informations sur la structure de la surface S et/ou sa texture. Dans une variante de réalisation, les extrema locaux peuvent par exemple être utilisés pour déterminer la rugosité de la surface S. On pourra ainsi déterminer des paramètres standard définis par les normes en vigueur comme le « Ra » (écart moyen), ou le « Rt » (écart total), ou des paramètres de symétrie comme le Rsk (asymétrie de la distribution des hauteurs) ou Rku (largeur de la distribution des hauteurs). Dans une autre variante de réalisation, la borne supérieure du pic peut être utilisée pour déterminer la position des sommets plutôt que la valeur moyenne des reliefs, et ainsi fournir une mesure de distance proche de celle fournie par un palpeur mécanique qui par nature repose sur les sommets de la rugosité de surface.

De préférence afin d'éviter que l'opérateur ne perçoive le mouvement du spot de mesure et d'éviter le scintillement grâce à la résistance rétinienne, la cadence de mesure du capteur optique 7 est supérieure ou égale à 50 Hz. On notera toutefois que les mesures peuvent être effectuées à une cadence inférieure sans pour autant les dégrader si cela est nécessaire, par exemple sur une surface très peu réfléchissante nécessitant un temps d'intégration plus grand. D'une façon générale une fréquence supérieure à 1 Hz pourra être utilisée.

Généralement, l'échantillon à inspecter ou à contrôler est une pièce mécanique. Sa rugosité résulte donc de son procédé de fabrication et peut ainsi être orientée dans une direction particulière, par exemple sa direction d'usinage. Afin de garantir que le système de balayage 10 réalise un moyennage spatial dynamique (moyennage optique) des reliefs de la surface S, il est donc préférable que la trajectoire 11 ne soit pas une droite parallèle à cette direction d'usinage. La direction d'usinage n'étant généralement ni visible ni connue par l'opérateur effectuant le contrôle ou l'inspection, la trajectoire 11 est donc de préférence omnidirectionnelle. Des exemples de trajectoire 11 omnidirectionnelles comprennent, de manière non limitative, une courbe fermée du type cercle, ellipse, ovale, etc. ou un balayage (c'est-à-dire un déplacement simultané ou successif du point de mesure suivant deux directions perpendiculaires à la manière d'un scanner). On notera que le choix d'une trajectoire 11 du type courbe fermée, et plus particulièrement circulaire, permet d'obtenir un moyennage spatial plus homogène, quel que soit le type de rugosité.

La distance parcourue par le spot de mesure le long de la trajectoire 11 pendant l'intervalle d'intégration du capteur optique 7 doit être suffisante pour obtenir un moyennage spatial efficace et lisser les rugosités de la surface S et dépend, notamment, de la rugosité de la surface S. En particulier, plus la rugosité de la surface S est importante, plus la vitesse de déplacement de l'axe de propagation sur la surface S doit être grande afin d'augmenter la distance parcourue par le spot de mesure sur la surface S pendant l'intervalle d'intégration. C'est pourquoi, de manière générale, la distance parcourue par le spot de mesure pendant l'intervalle d'intégration est comprise entre 30 $\mu$m et 600 $\mu$m, de préférence entre 50 $\mu$m et 400 $\mu$m. Cette distance permet ainsi d'obtenir des résultats équivalents à la surface de contact d'un palpeur mécanique.

De préférence, pendant un intervalle d'intégration du capteur optique 7, le spot de mesure n'est appliqué qu'une seule fois sur chaque zone de la surface S disposée le long de la trajectoire 11. En d'autres termes, le spot de mesure ne passe pas plusieurs fois au même endroit pendant un même intervalle d'intégration du capteur optique 7. A titre d'exemple, dans le cas d'une trajectoire 11 circulaire, le spot de mesure parcourt donc au plus le périmètre du cercle pendant l'intervalle de mesure. Dans le cas où le spot de mesure passe plusieurs fois au même endroit pendant un même intervalle d'intégration, c'est la distance parcourue par le spot de mesure le long de la trajectoire 11 pendant l'intervalle d'intégration sans chevauchement qui est déterminante pour assurer que le moyennage spatial est suffisant. Cette distance sans chevauchement est donc de préférence comprise entre 30 $\mu$m et 600 $\mu$m, typiquement entre 50 $\mu$m et 400 $\mu$m.

Le cas échéant, la vitesse de déplacement de l'axe de propagation sur la surface S peut être programmée, lorsque le système de balayage 10 le permet. De manière optionnelle, lorsque la vitesse de déplacement de l'axe de propagation peut être programmée, le dispositif 1 peut également être utilisé afin de déterminer la rugosité de la surface S. Pour cela, la vitesse de déplacement de l'axe de propagation est choisie de sorte que la distance parcourue par le spot de mesure pendant le temps d'intégration le long de la trajectoire 11 soit faible. La distance ainsi parcourue dépend de la rugosité de la surface S à mesurer : plus la surface S est rugueuse, plus la distance parcourue peut être importante. De manière générale, la distance parcourue est de préférence inférieure à 30 $\mu$m, par exemple de l'ordre de 1 $\mu$m à 20 $\mu$m. En effet, en parcourant une telle distance, le capteur optique 7 n'effectue pas une moyenne optique, puisque pendant le temps d'intégration, l'énergie totale qui est mesurée correspond à une trajectoire 11 très courte. Ce sont donc bien les rugosités de la surface S qui sont mesurées, et non leur moyenne optique qui est réalisée.

De manière alternative ou en complément, comme indiqué plus haut, la rugosité de la surface S peut être déterminée par détermination des extrema locaux à l'aide des moyens de traitement.

Le système de balayage 10 peut comprendre tout moyen permettant de déplacer l'axe de propagation afin que le spot de mesure parcoure une trajectoire 11 non ponctuelle. Par exemple, le système de balayage 10 peut fonctionner en transmission et être inséré dans le dispositif 1 sans couder (ou dévier) l'axe de propagation. En variante, le système de balayage 10 peut fonctionner en réflexion en créant au moins un repli sur le trajet optique du faisceau 9 lumineux.

Dans un premier mode de réalisation, le système de balayage 10 est intégré dans le dispositif 1, en amont du crayon optique 4. De préférence, le système de balayage 10 est intégré entre le collimateur 3 et le crayon optique 4.

En variante, le système de balayage 10 pourrait être fixé entre la fibre optique 6 et le collimateur 3 de sorte à déplacer le point source ou encore en aval du crayon optique 4.

Par exemple, dans une première forme de réalisation, le système de balayage 10 comprend une lentille à décentrement piloté, c'est-à-dire une lentille associée à un mécanisme configuré pour la faire vibrer de sorte à décentrer son axe optique, à la manière d'un réducteur de Speckle ou d'un stabilisateur optique d'un appareil photographique. Les vibrations générées par le mécanisme décentrent alors l'axe optique du faisceau 9 lumineux sans le couder.

Cette forme de réalisation permet d'obtenir un système de balayage 10 d'encombrement réduit, permettant de conserver la trajectoire 11 initiale de l'axe optique sans la couder.

En variante, d'autres moyens permettant de piloter le décentrement d'une lentille peuvent être utilisés, typiquement des lentilles liquides ou à cristaux liquides, dont la fonction optique (focale, centrage) peut être modifiée par des commandes électriques.

Dans une deuxième forme de réalisation, le système de balayage 10 comprend un prisme dont une face d'entrée est positionnée de sorte à présenter un angle non nul par rapport à un plan normal à l'axe de propagation du faisceau 9 lumineux au niveau de son arrivée sur ladite face d'entrée. Le prisme est monté mobile en rotation autour d'un axe qui est normal à ce plan et mis en rotation par un moteur dédié 12.

Par exemple, le prisme peut comprendre un prisme de coin (également désigné par « fenêtre à coin » ou « wedge prism » en anglais), placé sur le trajet optique du faisceau 9 lumineux, entre le collimateur 3 et le crayon optique 4. La trajectoire 11 suivie par le spot de mesure sur la surface S de l'échantillon est alors un cercle dont le rayon est fixe et dépend de l'angle entre sa face d'entrée et le plan.

L'angle entre la face d'entrée du prisme et le plan peut être égal à 0.5° afin d'obtenir un décalage de l'axe de propagation compris entre 25 $\mu$m et 30 $\mu$m. La trajectoire 11 est alors un cercle dont le diamètre est compris entre 50 $\mu$m et 60 $\mu$m.

Le prisme peut être mis en rotation par un moteur 12. De préférence, le moteur 12 est capable de faire tourner le prisme à une fréquence supérieure à 50 Hz, sans générer de vibrations, suivant un mouvement de rotation homogène. Par exemple, un moteur 12 à courant continu à arbre creux peut être utilisé. Un tel moteur 12 peut alors être fixé dans le dispositif 1 de projection, avec le prisme, entre le collimateur 3 et le crayon optique 4, et éviter ainsi de déporter la source du mouvement du prisme. Il n'est donc pas nécessaire d'adapter le crayon optique 4, et ce système de balayage 10 peut être utilisé en combinaison avec tout type de crayon optique 4. De préférence, le dispositif est équilibré afin de réduire les vibrations qui sont susceptibles de perturber les mesures. Dans le cas où le dispositif n'est pas suffisamment équilibré, la cadence de mesure est de préférence choisie élevée afin de ne pas exciter des fréquences de résonance du dispositif, de limiter les vibrations et de réduire le bruit qui pourrait être gênant pour l'opérateur.

Dans une troisième forme de réalisation, le système de balayage 10 comprend des moyens configurés pour déplacer la ou les fibres optiques 6 qui relient la source lumineuse 2 à l'objectif de projection de sorte à créer une déviation de l'axe de propagation du faisceau en déplaçant le point source.

Dans une quatrième forme de réalisation illustrée en figure 1, le système de balayage 10 comprend un miroir plan, monté mobile autour d'un axe de rotation de sorte qu'une surface S du miroir forme un angle non nul par rapport à un plan normal à cet axe de rotation. Il s'agit donc d'un système de balayage 10 en réflexion, en imposant un mouvement asymétrique permettant de faire varier la position du faisceau 9 lumineux réfléchi par le système de balayage 10 en sortie du crayon optique 4. La trajectoire 11 et la vitesse du spot de mesure sont définies par le mouvement appliqué par le miroir.

Dans cette forme de réalisation, l'objectif de projection est donc coudé. De préférence, le système de balayage 10 est placé entre le collimateur 3 et le crayon optique 4, là où le faisceau 9 optique est collimaté.

Par exemple, le miroir peut être placé de sorte qu'un angle entre son axe de rotation et l'axe de propagation soit égal à 45°, de sorte que le collimateur 3 et le crayon sont placés à 90° l'un par rapport à l'autre.

L'angle entre la surface S du miroir et l'axe de rotation est par exemple égal à 0.1°. La trajectoire 11 est alors un cercle dont le diamètre est de l'ordre de 50 μm.

Le miroir peut par exemple être incliné par rapport au plan normal à son axe de rotation en interposant une cale entre l'extrémité de l'arbre et le miroir. La différence d'épaisseur de la cale (entre son bord le plus fin et son bord le plus épais) est alors déterminée à l'aide de la formule suivante :

$$e = \emptyset_{miroir} \times sin\left(\left(tan^{-1}\left(\frac{\emptyset_{trajectoire}}{2 \times distance\ focale\ du\ capteur\ optique}\right)\right)\right)$$

où :

    $e$ est la différence d'épaisseur de la cale

    $\emptyset_{miroir}$ est le diamètre du miroir et de la cale

    $\emptyset_{trajectoire}$ est le diamètre du cercle sur lequel se déplace le point de mesure sur la surface S de l'échantillon

Par exemple, pour une trajectoire 11 de diamètre 56 μm et une distance focale de 10 mm, la différence d'épaisseur de la cale est égale à 70 μm.

Le miroir peut être mis en rotation autour de son axe de rotation par un moteur 12. Par exemple, un moteur 12 à courant continu, comprenant un arbre moteur 12 dont la fréquence est supérieure ou égale à 1 Hz peut être utilisé, par exemple de l'ordre de 100 Hz. Le miroir est fixé sur l'extrémité de l'arbre moteur 12, son axe de rotation étant alors coaxial à celui de l'arbre.

Par exemple, lorsque le capteur optique 7 présente un intervalle d'intégration de 10 ms (soit une vitesse d'acquisition de 100 Hz), la vitesse de rotation du moteur 12 peut être de 6000 tr/min, ce qui permet d'obtenir un moyennage sur un tour pour chaque temps d'intégration du capteur.

Avantageusement, l'utilisation d'un moteur 12 à courant continu autorise la modification de la vitesse de rotation du miroir, et donc la distance parcourue par le point de mesure pendant l'intervalle d'intégration du capteur optique 7. Son architecture permet en outre de facilement l'intégrer dans le dispositif 1. Enfin, son coût est modéré.

En variante, le miroir peut être mis en rotation par un moteur 12 pas à pas.

Dans une cinquième forme de réalisation, le système de balayage 10 comprend un miroir orientable adapté pour introduire une déviation optique dans le faisceau 9 lumineux. Un tel système de balayage 10 peut comprendre plusieurs actionneurs, permettant ainsi de combiner leurs mouvements afin d'obtenir une trajectoire 11 bidimensionnelle formant une courbe quelconque, qui peut être fermée ou ouverte. La réactivité de tels miroirs orientables est en outre de l'ordre de la milliseconde, avec un très faible bruit.

Les actionneurs peuvent comprendre l'un au moins des éléments du groupe suivant :

- une bobine magnétique fixée sur un substrat de référence associée à un ou plusieurs aimants collés sur la surface S inclinable (le miroir). L'application d'un courant dans la bobine permet crée un champ magnétique qui attire ou repousse le ou les aimants et déplace angulairement ainsi la surface S optique du miroir.
- un mécanisme piézoélectrique bimorphe, comprenant deux plaques piézoélectriques munies d'électrodes, l'application d'une tension sur les électrodes dilatant l'une des plaques et comprimant l'autre.
- un mécanisme piézoélectrique monomorphe, comprenant une plaque piézoélectrique connectée à une électrode et un substrat de référence,
- un empilement piézoélectrique ou électrostrictif comprenant des actionneurs composés d'empilements de plaques ou de disques que l'on peut dilater ou comprimer par effet piézoélectrique ou électrostrictif en fonction de matériaux utilisés,

- un microsystème électromécanique (MEMS) comprenant une membrane réfléchissante continue ou segmentée attachée en certain points

- les actionneurs - à une membrane intermédiaire qui sert d'électrode supérieure, tandis que l'électrode inférieure est gravée dans une couche de silicium. Une tension appliquée aux bornes de ces deux électrodes crée un champ électrostatique qui déplace les membranes, et donc le miroir.

Par exemple, dans le cas d'un miroir orientable comprenant au moins un actionneur de type piézoélectrique, on peut obtenir une fréquence maximale comprise entre 1 kHz et 10 kHz selon la technologie sélectionnée et une course mécanique comprise entre 5 $\mu$m et 40 $\mu$m.

Dans un deuxième mode de réalisation, le système de balayage 10 est intégré au crayon optique 4.

Par exemple, dans une forme de réalisation, l'une des lentilles du crayon optique 4 présente un décentrement piloté. Le système de balayage 10 comprend alors un mécanisme configuré pour faire vibrer l'une des lentilles du crayon optique 4 de sorte à décentrer l'axe de propagation. Les vibrations générées par le mécanisme décentrent alors l'axe de propagation du faisceau 9 lumineux sans le couder.

## Revendications

1. Dispositif (1) de mesure confocale chromatique d'une hauteur et/ou d'une orientation locale d'une surface (S) d'un échantillon, le dispositif (1) comprenant :

   - une source lumineuse (2) configurée pour générer un faisceau (9) lumineux polychromatique,
   - un objectif (4) de projection comportant un objectif (4) à chromatisme axial configuré pour appliquer le faisceau (9) lumineux sur la surface (S) de l'échantillon, le faisceau (9) lumineux présentant un axe de propagation défini,
   - un capteur optique, configuré pour recevoir un faisceau (9) lumineux réfléchi par la surface (S) de l'échantillon et mesurer une énergie totale dudit faisceau (9) lumineux réfléchi reçue pendant un intervalle d'intégration, et
   - une unité de traitement du signal issu du capteur optique configurée pour déterminer la hauteur et/ou l'orientation locale de la surface de l'échantillon ;

   le dispositif (1) de mesure étant **caractérisé en ce qu'**il comprend en outre un système de balayage (10), couplé à l'objectif (4) de projection et configuré pour déplacer l'axe de propagation du faisceau (9) lumineux par rapport à l'objectif (4) de projection le long d'une trajectoire (11) prédéterminée pendant l'intervalle d'intégration du capteur optique, de sorte que l'énergie totale mesurée par le capteur optique corresponde à une moyenne spatiale dynamique de l'énergie totale du faisceau (9) lumineux réfléchi par la surface (S) de l'échantillon le long de la trajectoire (11) prédéterminée.

2. Dispositif (1) selon la revendication 1, dans lequel le système de balayage (10) est configuré pour déplacer l'axe de propagation sur la surface (S) de l'échantillon à une vitesse définie de sorte qu'une distance parcourue par l'axe de propagation sur la surface (S) de l'échantillon pendant l'intervalle d'intégration mesure entre trente micromètres et six cent micromètres, de préférence entre cinquante micromètres et quatre cent micromètres.

3. Dispositif (1) selon l'une des revendications 1 et 2, dans lequel la trajectoire (11) est une boucle fermée, le système de balayage (10) étant configuré pour déplacer l'axe de propagation le long de la trajectoire (11) à une fréquence supérieure ou égale à 1 Hz, de préférence supérieure à 50 Hz.

4. Dispositif (1) selon l'une des revendications 1 à 3, dans lequel le système de balayage (10) comprend l'un au moins des éléments suivants :

   - une lentille à décentrement piloté,
   - un prisme dont une face d'entrée est positionnée de sorte à présenter un angle non nul par rapport à un plan normal à l'axe de propagation du faisceau (9) lumineux au niveau de son arrivée sur ladite face d'entrée, ledit prisme étant monté mobile en rotation autour d'un axe qui est normal audit plan,
   - des moyens configurés pour déplacer au moins une fibre optique (6) reliant la source lumineuse (2) à l'objectif (4) de projection de sorte à créer une déviation de l'axe de propagation du faisceau lumineux en déplaçant son point source,
   - un miroir plan, monté mobile autour d'un axe de rotation, une surface (S) du miroir formant un angle non nul par rapport à un plan normal à l'axe de rotation,
- un miroir orientable adapté pour introduire une déviation optique dans le faisceau (9) lumineux.

5. Procédé de mesure confocale chromatique d'une hauteur ou d'une position d'une surface (S) d'un échantillon à l'aide d'un dispositif (1) selon l'une des revendications 1 à 4, le procédé comprenant les étapes suivantes :

- générer un faisceau (9) lumineux polychromatique
- appliquer le faisceau (9) lumineux sur la surface (S) de l'échantillon (S1), le faisceau (9) lumineux présentant un axe de propagation défini à l'aide de l'objectif (4) de projection du dispositif (1) et
- recevoir le faisceau (9) lumineux réfléchi par la surface (S) par le capteur optique du dispositif (1) (S3) et mesurer une énergie totale dudit faisceau (9) lumineux réfléchi reçue pendant un intervalle d'intégration (S4), le procédé étant **caractérisé en ce qu'**il comprend en outre une étape (S2) de déplacement de l'axe de propagation du faisceau (9) lumineux par rapport à l'objectif (4) de projection le long d'une trajectoire (11) prédéterminée pendant la réception du faisceau (9) lumineux réfléchi par la surface (S) par le capteur optique, de sorte que le capteur optique effectue une moyenne spatiale dynamique de l'énergie totale du faisceau (9) lumineux réfléchi par la surface (S) de l'échantillon le long de la trajectoire (11) prédéterminée.

6. Procédé selon la revendication 5, comprenant en outre une étape de définition de la hauteur ou de la position de la surface (S) à partir de la moyenne spatiale dynamique.

7. Procédé selon l'une des revendications 5 ou 6, dans lequel le faisceau (9) lumineux réfléchi est transmis à un spectrographe (5) configuré pour déterminer un ou plusieurs pics correspondant à des interfaces rencontrées par le faisceau (9) lumineux sur la surface (S), le procédé comprenant en outre une étape au cours de laquelle une somme des pics ainsi déterminé est réalisée pendant l'intervalle d'intégration pour obtenir un pic moyenné et une étape au cours de laquelle un barycentre du pic moyenné est déterminé.

8. Procédé selon l'une des revendications 5 à 7, dans lequel l'axe de propagation du faisceau (9) lumineux est déplacé le long d'une trajectoire (11) fermée, l'axe de propagation du faisceau (9) lumineux est déplacé le long de la trajectoire (11) à une fréquence supérieure ou égale à 1 Hz, de préférence supérieure à 50 Hz.

9. Procédé selon l'une des revendications 5 à 8, dans lequel une distance parcourue par l'axe de propagation sur la surface (S) de l'échantillon pendant l'intervalle d'intégration mesure entre trente micromètres et six cent micromètres, de préférence entre cinquante micromètres et quatre cent micromètres.

10. Procédé de détermination d'une rugosité d'une surface (S) d'un échantillon à l'aide d'un dispositif de mesure confocale chromatique (1) selon l'une des revendications 1 à 4, le procédé comprenant les étapes suivantes :

- générer un faisceau (9) lumineux polychromatique
- appliquer le faisceau (9) lumineux sur la surface (S) de l'échantillon (S1), le faisceau (9) lumineux présentant un axe de propagation défini à l'aide de l'objectif (4) de projection du dispositif (1) et
- recevoir le faisceau (9) lumineux réfléchi par la surface (S) par le capteur optique du dispositif (1) (S3) et mesurer une énergie totale dudit faisceau (9) lumineux réfléchi reçue pendant un intervalle d'intégration (S4), le procédé étant **caractérisé en ce qu'**il comprend en outre une étape (S2) de déplacement de l'axe de propagation du faisceau (9) lumineux par rapport à l'objectif (4) de projection le long d'une trajectoire (11) prédéterminée pendant la réception du faisceau (9) lumineux réfléchi par la surface (S) par le capteur optique, de sorte que le capteur optique mesure une rugosité de la surface (S) de l'échantillon le long de la trajectoire (11) prédéterminée.

11. Procédé selon la revendication 10, dans lequel l'axe de propagation du faisceau (9) lumineux est déplacé le long de la trajectoire (11) à une fréquence supérieure ou égale à 1 Hz.

12. Procédé selon l'une des revendications 10 et 11, dans lequel une distance parcourue par l'axe de propagation sur la surface (S) de l'échantillon pendant l'intervalle d'intégration mesure entre un micromètre et vingt micromètres.

13. Procédé selon l'une des revendications 10 à 12, comprenant en outre une étape d'identification des extrema locaux de l'énergie totale du faisceau lumineux le long de la trajectoire (11) prédéterminée.

14. Procédé selon la revendication 13, dans lequel le faisceau (9) lumineux réfléchi est transmis à un spectrographe (5) configuré pour déterminer un ou plusieurs pics correspondant à des interfaces rencontrées par le faisceau (9) lumineux sur la surface (S), le procédé comprenant en outre une étape au cours de laquelle les extrema sont déterminés en réalisant une somme des pics pendant l'intervalle d'intégration pour obtenir un pic moyenné et en déterminant des bornes du pic moyenné.

15. Procédé selon l'une des revendications 10 à 14, dans lequel le faisceau (9) lumineux réfléchi est transmis à un spectrographe (5) configuré pour déterminer un ou plusieurs pics correspondant à des interfaces rencontrées par le faisceau (9) lumineux sur la surface (S), le procédé comprenant en outre une étape au cours de laquelle une somme des pics ainsi déterminé est réalisée pendant l'intervalle d'intégration pour obtenir un pic moyenné et une étape au cours de laquelle une forme et/ou une symétrie du pic moyenné est déterminée.

**Patentansprüche**

1. Vorrichtung (1) zur chromatisch-konfokalen Messung einer Höhe und/oder einer lokalen Ausrichtung einer Oberfläche (S) einer Probe, wobei die Vorrichtung (1) umfasst:

   - eine Lichtquelle (2), die konfiguriert ist, um einen polychromatischen Lichtstrahl (9) zu erzeugen,
   - eine Projektionslinse (4), eine axial chromatische Linse (4) beinhaltend, die konfiguriert ist, um den Lichtstrahl (9) auf die Oberfläche (S) der Probe zu applizieren, wobei der Lichtstrahl (9) eine definierte Ausbreitungsachse aufweist,
   - einen optischen Sensor, der konfiguriert ist, um einen Lichtstrahl (9) zu empfangen, der von der Oberfläche (S) der Probe reflektiert wird, und eine Gesamtenergie des reflektierten Lichtstrahls (9) zu messen, der während eines Integrationsintervalls empfangen wird, und
   - eine Einheit zur Verarbeitung des Signals, das aus dem optischen Sensor hervorgegangen ist, um die Höhe und/oder die lokale Ausrichtung der Probenoberfläche zu bestimmen;

   wobei die Messvorrichtung (1) **dadurch gekennzeichnet ist, dass** sie ferner ein Abtastsystem (10) umfasst, das mit der Projektionslinse (4) gekoppelt ist, und konfiguriert, um die Ausbreitungsachse des Lichtstrahls (9) relativ zur Projektionslinse (4) zu verschieben, entlang einer vorbestimmten Trajektorie (11) während des Integrationsintervalls des optischen Sensors, so dass die vom optischen Sensor gemessene Gesamtenergie einer dynamischen räumlichen Mittelung der Gesamtenergie des Lichtstrahls (9) entspricht, der von der Oberfläche (S) der Probe entlang der vorbestimmten Trajektorie (11) reflektiert wird.

2. Vorrichtung (1) nach Anspruch 1, wobei das Abtastsystem (10) konfiguriert ist, um die Ausbreitungsachse auf der Oberfläche (S) der Probe mit einer definierten Geschwindigkeit zu verschieben, so dass eine von der Ausbreitungsachse auf der Oberfläche (S) der Probe während des Integrationsintervalls zurückgelegte Distanz zwischen dreißig Mikrometern und sechshundert Mikrometern beträgt, vorzugsweise zwischen fünfzig Mikrometern und vierhundert Mikrometern.

3. Vorrichtung (1) nach einem der Ansprüche 1 und 2, wobei die Trajektorie (11) eine geschlossene Schleife ist, wobei das Abtastsystem (10) konfiguriert ist, um die Ausbreitungsachse entlang der Trajektorie (11) zu verschieben mit einer Frequenz größer oder gleich 1 Hz, vorzugsweise größer als 50 Hz.

4. Vorrichtung (1) nach einem der Ansprüche 1 bis 3, wobei das Abtastsystem (10) mindestens eines der folgenden Elemente umfasst:

   - eine gesteuerte Shift-Linse,
   - ein Prisma, dessen eine Eintrittsfläche so positioniert ist, dass sie einen Winkel ungleich null zu einer Ebene aufweist, die senkrecht zur Ausbreitungsachse des Lichtstrahls (9) im Bereich seines Eintritts in die Eintrittsfläche ist, wobei das Prisma beweglich um eine Achse drehend montiert ist, die senkrecht zur Ebene ist,
   - Mittel, die konfiguriert sind, um mindestens eine Glasfaser (6) zu verschieben, die die Lichtquelle (2) mit der Projektionslinse (4) verbindet, so dass eine Umlenkung der Ausbreitungsachse des Lichtstrahls durch Verschieben seines Quellpunkts erzeugt wird,
   - einen Planspiegel, der um eine Rotationsachse beweglich montiert ist, wobei eine Oberfläche (S) des Spiegels einen Winkel ungleich null zu einer Ebene bildet, die senkrecht zur Rotationsachse ist,
   - einen verstellbaren Spiegel, der geeignet ist, eine optische Umlenkung in den Lichtstrahl (9) einzuführen.

5. Verfahren zur chromatisch-konfokalen Messung einer Höhe oder einer Position einer Oberfläche (S) einer Probe unter Verwendung einer Vorrichtung (1) nach einem der Ansprüche 1 bis 4, wobei das Verfahren die folgenden Schritte umfasst:

- Erzeugen eines polychromatischen Lichtstrahls (9),
- Applizieren des Lichtstrahls (9) auf der Oberfläche (S) der Probe (S1), wobei der Lichtstrahl (9) eine Ausbreitungsachse aufweist, die unter Verwendung der Projektionslinse (4) der Vorrichtung (1) definiert wird, und
- Empfangen des Lichtstrahls (9), der von der Oberfläche (S) reflektiert wird, durch den optischen Sensor der Vorrichtung (1) (S3), und Messen einer Gesamtenergie des reflektierten Lichtstrahls (9), der während eines Integrationsintervalls (S4) empfangen wird, wobei das Verfahren **dadurch gekennzeichnet ist, dass** es ferner einen Schritt (S2) des Verschiebens der Ausbreitungsachse des Lichtstrahls (9) relativ zur Projektionslinse (4) umfasst, entlang einer vorbestimmten Trajektorie (11) während dem Empfang des Lichtstrahls (9), der von der Oberfläche (S) reflektiert wird, durch den optischen Sensor, so dass der optische Sensor eine dynamische räumliche Mittelung der Gesamtenergie des Lichtstrahls (9) durchführt, der von der Oberfläche (S) der Probe entlang der vorbestimmten Trajektorie (11) reflektiert wird.

6. Verfahren nach Anspruch 5, ferner einen Schritt zum Definieren der Höhe oder der Position der Oberfläche (S) ausgehend von der dynamischen räumlichen Mittelung umfassend.

7. Verfahren nach einem der Ansprüche 5 oder 6, wobei der reflektierte Lichtstrahl (9) an einen Spektrographen (5) übertragen wird, der konfiguriert ist, um einen oder mehrere Peaks zu bestimmen, die Grenzflächen entsprechen, auf die der Lichtstrahl (9) auf der Oberfläche (S) trifft, wobei das Verfahren ferner einen Schritt umfasst, in dessen Verlauf eine so bestimmte Summe von Peaks während des Integrationsintervalls realisiert wird, um einen gemittelten Peak zu erhalten, und einen Schritt, in dessen Verlauf ein Baryzentrum des gemittelten Peaks bestimmt wird.

8. Verfahren nach einem der Ansprüche 5 bis 7, wobei die Ausbreitungsachse des Lichtstrahls (9) entlang einer geschlossenen Trajektorie (11) verschoben wird, wobei die Ausbreitungsachse des Lichtstrahls (9) entlang der Trajektorie (11) verschoben wird mit einer Frequenz größer oder gleich 1 Hz, vorzugsweise größer als 50 Hz.

9. Verfahren nach einem der Ansprüche 5 bis 8, wobei eine Distanz, die von der Ausbreitungsachse auf der Oberfläche (S) der Probe während des Integrationsintervalls zurückgelegt wird, zwischen dreißig Mikrometern und sechshundert Mikrometern beträgt, vorzugsweise zwischen fünfzig Mikrometern und vierhundert Mikrometern.

10. Verfahren zur Bestimmung einer Rauheit einer Oberfläche (S) einer Probe unter Verwendung einer chromatisch-konfokalen Messvorrichtung (1) nach einem der Ansprüche 1 bis 4, wobei das Verfahren die folgenden Schritte umfasst:

- Erzeugen eines polychromatischen Lichtstrahls (9),
- Applizieren des Lichtstrahls (9) auf der Oberfläche (S) der Probe (S1), wobei der Lichtstrahl (9) eine Ausbreitungsachse aufweist, die unter Verwendung der Projektionslinse (4) der Vorrichtung (1) definiert wird, und
- Empfangen des Lichtstrahls (9), der von der Oberfläche (S) reflektiert wird, durch den optischen Sensor der Vorrichtung (1) (S3), und Messen einer Gesamtenergie des reflektierten Lichtstrahls (9), der während eines Integrationsintervalls (S4) empfangen wird, wobei das Verfahren **dadurch gekennzeichnet ist, dass** es ferner einen Schritt (S2) des Verschiebens der Ausbreitungsachse des Lichtstrahls (9) relativ zur Projektionslinse (4) umfasst, entlang einer vorbestimmten Trajektorie (11) während dem Empfang des Lichtstrahls (9), der von der Oberfläche (S) reflektiert wird, durch den optischen Sensor, so dass der optische Sensor eine Rauheit der Oberfläche (S) der Probe entlang der vorbestimmten Trajektorie (11) misst.

11. Verfahren nach Anspruch 10, wobei die Ausbreitungsachse des Lichtstrahls (9) entlang der Trajektorie (11) mit einer Frequenz größer oder gleich 1 Hz verschoben wird.

12. Verfahren nach einem der Ansprüche 10 und 11, wobei eine Distanz, die von der Ausbreitungsachse auf der Oberfläche (S) der Probe während des Integrationsintervalls zurückgelegt wird, zwischen einem Mikrometer und zwanzig Mikrometern beträgt.

13. Verfahren nach einem der Ansprüche 10 bis 12, ferner einen Schritt zur Identifizierung der lokalen Extrema der Gesamtenergie des Lichtstrahls entlang der vorbestimmten Trajektorie (11) umfassend.

**14.** Verfahren nach Anspruch 13, wobei der reflektierte Lichtstrahl (9) an einen Spektrographen (5) übertragen wird, der konfiguriert ist, um einen oder mehrere Peaks zu bestimmen, die Grenzflächen entsprechen, auf die der Lichtstrahl (9) auf der Oberfläche (S) trifft, wobei das Verfahren ferner einen Schritt umfasst, in dessen Verlauf die Extrema bestimmt werden, indem eine Summe der Peaks während des Integrationsintervalls realisiert wird, um einen gemittelten Peak zu erhalten, und indem Grenzen des gemittelten Peaks bestimmt werden.

**15.** Verfahren nach einem der Ansprüche 10 bis 14, wobei der reflektierte Lichtstrahl (9) an einen Spektrographen (5) übertragen wird, der konfiguriert ist, um einen oder mehrere Peaks zu bestimmen, die Grenzflächen entsprechen, auf die der Lichtstrahl (9) auf der Oberfläche (S) trifft, wobei das Verfahren ferner einen Schritt umfasst, in dessen Verlauf eine so bestimmte Summe der Peaks während des Integrationsintervalls realisiert wird, um einen gemittelten Peak zu erhalten, und einen Schritt, in dessen Verlauf eine Form und/oder eine Symmetrie des gemittelten Peaks bestimmt wird.

**Claims**

**1.** A device (1) for chromatic confocal measurement of a local height and/or orientation of a surface (S) of a sample, the device (1) comprising:

- a light source (2) configured to generate a polychromatic light beam (9),
- a projection objective lens (4) comprising an axial chromatic lens (4) configured to apply the light beam (9) to the surface (S) of the sample, the light beam (9) having a defined propagation axis,
- an optical sensor, configured to receive a reflected light beam (9) from the sample surface (S) and measure a total energy of said reflected light beam (9) received during an integration interval, and
- a unit for processing the signal from the optical sensor, configured to determine the height and/or local orientation of the surface of the sample; the measuring device (1) being **characterised in that** it further comprises a scanning system (10), coupled to the projection objective lens (4) and configured to move the axis of propagation of the light beam (9) relative to the projection objective lens (4) along a predetermined path (11) during the integration interval of the optical sensor, so that the total energy measured by the optical sensor corresponds to a dynamic spatial average of the total energy of the light beam (9) reflected by the surface (S) of the sample along the predetermined path (11).

**2.** A device (1) according to claim 1, wherein the scanning system (10) is configured to move the propagation axis over the sample surface (S) at a defined speed so that a distance travelled by the propagation axis over the sample surface (S) during the integration interval measures between thirty micrometres and six hundred micrometres, preferably between fifty micrometres and four hundred micrometres.

**3.** Device (1) according to one of claims 1 and 2, wherein the path (11) is a closed loop, the scanning system (10) being configured to move the propagation axis along the path (11) at a frequency greater than or equal to 1 Hz, preferably greater than 50 Hz.

**4.** A device (1) according to any of claims 1 to 3, wherein the scanning system (10) comprises at least one of the following:

- a controlled-decentration lens,
- a prism, an entrance face of which is positioned so as to present a non-zero angle with respect to a plane normal to the axis of propagation of the light beam (9) at the level of its arrival on the said entrance face, said prism being mounted so as to be able to rotate about an axis which is normal to said plane,
- means configured to move at least one optical fibre (6) connecting the light source (2) to the projection objective lens (4) so as to create a deviation of the axis of propagation of the light beam by moving its source point,
- a plane mirror, mounted so as to be movable about an axis of rotation, a surface (S) of the mirror forming a non-zero angle with respect to a plane normal to the axis of rotation,
- an orientable mirror adapted to introduce an optical deviation into the light beam (9).

**5.** A method of chromatic confocal measurement of a height or position of a surface (S) of a sample using a device (1) according to one of claims 1 to 4, the method comprising the following steps:

- generate a polychromatic light beam (9)
- applying the light beam (9) to the surface (S) of the sample (S1), the light beam (9) having a propagation axis defined using the projection objective lens (4) of the device (1), and
- receiving the light beam (9) reflected from the surface (S) by the optical sensor of the device (1) (S3) and measuring a total energy of said reflected light beam (9) received during an integration interval (S4),

the method being **characterised in that** it further comprises a step (S2) of moving the axis of propagation of the light beam (9) relative to the projection objective lens (4) along a predetermined path (11) during reception of the light beam (9) reflected by the surface (S) by the optical sensor, so that the optical sensor performs a dynamic spatial average of the total energy of the light beam (9) reflected by the surface (S) of the sample along the predetermined path (11).

6. A method according to claim 5, further comprising a step of defining the height or position of the surface (S) from the dynamic spatial average.

7. Method according to one of claims 5 or 6, wherein the reflected light beam (9) is transmitted to a spectrograph (5) configured to determine one or more peaks corresponding to interfaces encountered by the light beam (9) on the surface (S), the method further comprising a step during which a sum of the peaks thus determined is performed during the integration interval in order to obtain an averaged peak and a step during which a barycentre of the averaged peak is determined.

8. Method according to one of claims 5 to 7, wherein the propagation axis of the light beam (9) is moved along a closed path (11), the axis of propagation of the light beam (9) is moved along the path (11) at a frequency greater than or equal to 1 Hz, preferably greater than 50 Hz.

9. Method according to one of claims 5 to 8, wherein a distance travelled by the propagation axis on the surface (S) of the sample during the integration interval measures between thirty micrometres and six hundred micrometres, preferably between fifty micrometres and four hundred micrometres.

10. A method of determining a roughness of a surface (S) of a sample using a chromatic confocal measurement device (1) according to one of claims 1 to 4, the method comprising the following steps:

    - generate a polychromatic light beam (9)
    - applying the light beam (9) to the surface (S) of the sample (S1), the light beam (9) having a propagation axis defined using the projection objective lens (4) of the device (1), and
    - receiving the light beam (9) reflected from the surface (S) by the optical sensor of the device (1) (S3) and measuring a total energy of said reflected light beam (9) received during an integration interval (S4),

the method being **characterised in that** it further comprises a step (S2) of displacing the propagation axis of the light beam (9) relative to the projection objective lens (4) along a predetermined path (11) during reception of the light beam (9) reflected by the surface (S) by the optical sensor, so that the optical sensor measures a roughness of the surface (S) of the sample along the predetermined path (11).

11. Method according to claim 10, wherein the propagation axis of the light beam (9) is moved along the path (11) at a frequency greater than or equal to 1 Hz.

12. A method according to any of claims 10 and 11, wherein a distance travelled by the propagation axis on the surface (S) of the sample during the integration interval measures between one micrometer and twenty micrometers.

13. A method according to one of claims 10 to 12, further comprising a step of identifying the local extrema of the total energy of the light beam along the predetermined path (11).

14. A method according to claim 13, wherein the reflected light beam (9) is transmitted to a spectrograph (5) configured to determine one or more peaks corresponding to interfaces encountered by the light beam (9) on the surface (S), the method further comprising a step during which the extrema are determined by performing a sum of the peaks during the integration interval to obtain an averaged peak and by determining bounds of the averaged peak.

15. A method according to one of claims 10 to 14, wherein the reflected light beam (9) is transmitted to a spectrograph (5) configured to determine one or more peaks corresponding to interfaces encountered by the light beam (9) on the surface (S), the method further comprising a step in which a sum of the peaks thus determined is performed during the integration interval to obtain an averaged peak and a step in which a shape and/or symmetry of the averaged peak is determined.

**FIG. 1**

# FIG. 2

# FIG. 3

# FIG. 4

S

| Appliquer un faisceau lumineux sur la surface | S1 |

↓

| Déplacer l'axe de propagation du faisceau lumineux le long d'une trajectoire prédéterminée | S2 |

↓

| Recevoir le faisceau lumineux réfléchi | S3 |

↓

| Mesurer une énergie totale du faisceau lumineux pendant le déplacement de l'axe de propagation | S4 |

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1505425 A

- US 20170227352 A